# EUROPEAN PATENT APPLICATION

(11) **EP 1 107 143 A2**
(43) Date of publication of application: **13.06.2001**
(21) Application number: 00126183.3
(22) Date of filing: 30.11.2000
(51) Int. Cl.: G06F 17/60

(54) **Information distributing apparatus, information storing apparatus, and information providing system**

(30) Priority: 02.12.1999 JP 34397099
(71) Applicant: MATSUSHITA ELECTRIC INDUSTRIAL CO., LTD., Kadoma-shi, Osaka 571-8501 (JP)
(72) Inventor: Ando, Atsushi, Yokohama-shi, Kanagawa (JP); Inoue, Akino, Tokyo (JP); Oka, Tshio, Yokohama-shi, Kanagawa (JP); Takaki, Toshimasa, Tokyo (JP)
(74) Representative: Grünecker, Kinkeldey, Stockmair & Schwanhäusser Anwaltssozietät

(57) **Abstract**

An information providing apparatus is realized: That is, in such a case that information is distributed/provided and this information is constituted by information formed by an information provider and also additional information such as an advertisement selected by the information provider, a use fee charged to the information provider can be reduced and/or increased based upon the additional information. Furthermore, since an information consumer refers to the additional information, a use fee charged to the information provider can be reduced and/or increased based on the additional information. The information providing apparatus is comprised of: a reception unit for receiving information to be provided; an information storage unit for storing thereinto the received information; a charge calculation unit for calculating a charge amount in accordance with additional information owned by the information by analyzing the information stored in the information storage unit, or for calculating a charge amount based upon a reference result of the additional information; a charge data storage unit for storing thereinto the calculated charge amount. Furthermore, the information providing apparatus is provided with a reference record storage unit, a reference base, and a reference control unit for providing the information stored in the information storage unit in response to a request, and also for producing such a signal for notifying the reference of the additional information.

## Description

### BACKGROUND OF THE INVENTION

The present invention is related to an information providing apparatus which is arranged by a personal computer, a portable information terminal, a portable telephone, and a digital network such as a public telephone network typically known as a LAN (Local Area Network), PSTN, ISDN, and W-CDMA.

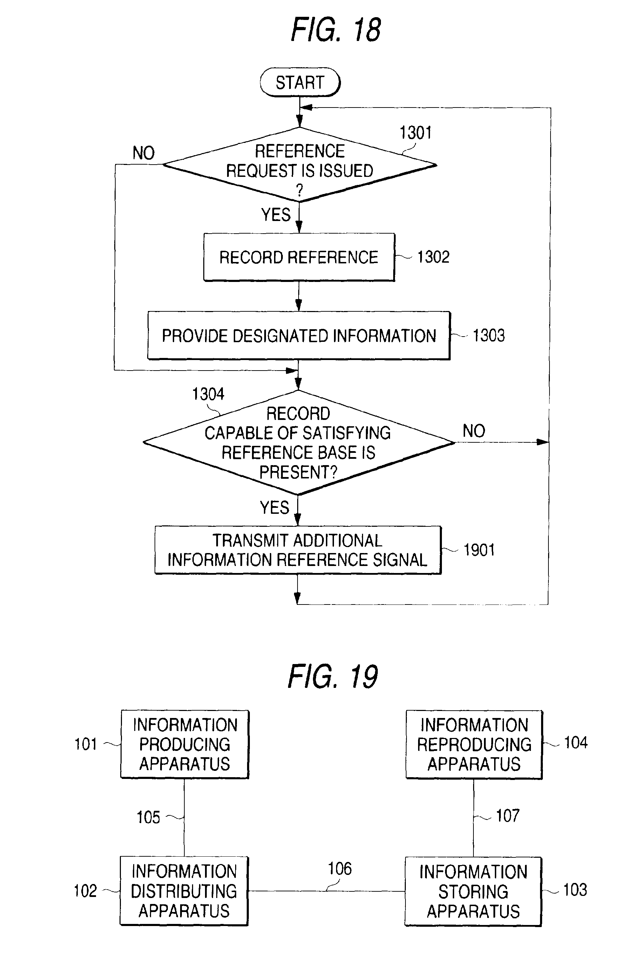

Conventionally, this sort of information providing apparatus will now be described with reference to Fig. 19, while an information providing apparatus having a server/client type structure is employed as an example. In Fig. 19, reference numeral 101 indicates an information producing apparatus, reference numeral 102 shows an information distributing apparatus, reference numeral 103 represents an information storing apparatus, reference numeral 104 denotes an information reproducing apparatus, and reference numeral 105 is a network used to connect the information distributing apparatus 102 to the information producing apparatus 101. Also, reference numeral 106 shows another network used to connect the information distributing apparatus 102 to the information storing apparatus 103, and reference numeral 107 represents another network used to connect the information storing apparatus 103 to the information reproducing apparatus 104. Both the information producing apparatus 101 and the information reproducing apparatus 104 are mounted in an appliance called as a "client" which is generally known from a personal computer, a portable information terminal, a portable telephone, and the like. Also, both the information distributing apparatus 102 and the information storing apparatus 103 are mounted in an appliance called as a "server" which is generally known as a computer and so on. The networks 105, 106, and 107 selectively uses a digital network such as the Internet, LAN, and public telephone network in a proper manner.

Next, operation of the above-described conventional information providing apparatus will now be explained. In the beginning, an information provider produces such information which is to be provided by employing the information producing apparatus 101, and transmits this information with describing a providing destination of this information via the network 105 to the information distributing apparatus 102. The information distributing apparatus 102 transmits the distributed information via the network 106 to all of the information storing apparatuses 103 which own relationships with designated providing destinations. The information storing apparatus 103 saves thereinto the distributed information, and also provides the saved information in response to a request issued from the information producing apparatus 104. The information reproducing apparatus 104 arbitrarily selects the information saved in the information storing apparatus via the network 107, and then reproduces and displays the selected information.

A typical example of the above-explained information providing apparatus is known as electronic mails and providing of information via the WWW (World Wide Web), Also, a user of such an information providing apparatus pays a use fee (charge) of a network and also pays a use fee of such an information providing service with respect to the respective network/service managers. As the typical example of the use fee, there are telephone charges and the Internet connection charges. Nowadays, multimedia mails may be realized, while such information communication means are advantageously progressed. On the other hand, since data sizes of these multimedia mails to be handled are very large, use fees and also communication charges are increased. Under such a circumstance, in order to reduce use fees and therefore promote utilizations of multimedia mails, the following idea has been proposed. That is, such information as advertisements may be provided in addition to provisions of original information. The typical information/advertisement providing methods are described in Japanese Laid-open PatentApplication No. Hei-6-46175; Japanese Laid-open Patent Application No. Hei-9-114755; Japanese Laid-open Patent Application No. Hei-10-325655; Japanese Laid-open Patent Application No. Hei-10-271226; and Japanese Laid-open Patent Application No. Hei-10-290443. These conventional providing methods own the following commonly used idea. That is, when a user (namely, information consumer) refers to an advertisement, a use fee which should be originally paid by this user may be discounted based upon the referred advertisement. Namely, a discount of a use fee may be carried out on the basis of advertisement referred by a user.

However, in the conventional use fee discounting method on the basis of only such a user, the advertisement referring action is merely and voluntarily determined by the user. In other words, this conventional use fee discounting method could not solve the below-mentioned problems. That is, no one knows that the user truly wants to observe such an advertisement, or the advertisement information can be really provided with such a true user who originally wishes to see this advertisement information. Therefore, the true intention of the advertisement provider who originally wants to provide the desirable advertisement in the effective format could not be sufficiently reflected on these conventional use fee discounting method. This is because an "advertisement" is merely handled in an one-way provision from an advertisement provider to an information consumer. The reason is given as follows. This conventional advertisement providing method inherently owns a limitation. An advertisement provider owns such a limited idea. That is, an advertisement program is broadcasted in such a time range that a large number of consumers might observe such an advertisement program, who are wanted to see this advertisement program by the advertisement provider. Alternatively, such an advertisement is displayed at a place where a large number of consumers who are required to see this advertisement by the advertisement provider might be collected. Thereafter, these consumers voluntarily observe this advertisement.

As previously explained, the problems to be solved by the present invention may be summarized as follows: As the first aspect, while such information is received in which one information such as an advertisement (will be referred to as "additional information" hereinafter) has been added to another information which is intentially required to be supplied from an information provider (will be referred to as "main information" hereinafter), a use fee charged to the information provider side can be varied by checking as to whether or not the additional information is present. As the second aspect, while sensing such a fact that an information consumer refers to the additional information, a use fee charged to the information provider can be varied.

### SUMMARY OF THE INVENTION

Therefore, an object of the present invention is to provide such a technical system capable of supplying an information providing service in lower cost. That is to say, while this technical system is provided not only with an advertisement referring person, another technical system used to recommend the advertisement is provided, and also, a further technical system may be provided which can reduce a use fee charged to such a person who recommends this advertisement. As a result, a more effective advertisement can be provided by recommending the advertisement in addition to the low cost of the user fee. While the advertisement is recommended, a person who can grasp favorable matters of the advertisement referring persons may distribute electronic mails to these advertisement referring persons.

To achieve the above-explained object, in accordance with the present invention, a system capable of discounting a use fee may be provided. In this use fee discounting system, the use fee may be discounted by recommending such an advertisement in addition to a use fee discounted by referring to the advertisement. This use fee discounting system according to the present invention will now be summarized:

Now, the following case is conceived. That is, a user "A" sends an electronic mail to another user "B." After the user A forms an electronic mail, this user A selects one, or more advertisement information which might be useful for the user B, and then adds this selected advertisement information to the formed electronic mail. Then, this user A transmits the resulting electronic mail. When a electronic mail service provider detects such a fact that the advertisement information is added to the electronic mail sent from the user A, this electronic mail service provider discounts a use fee charged to this user A based on the added advertisement information. As a result, the user A can utilize the electronic mail service in low cost.

On the other hand, the user B can refer to the electronic mail transmitted from the user A, or can refer to the advertisement information before/after referring to this electronic mail. In the case that the electronic mail service provider detects such a fact that the user B refers to the advertisement information added to the electronic mail sent from the user A, this electronic mail service provider discounts a use fee charged to this user B based on the added advertisement information. As a result, the user B can utilize the electronic mail service in low cost. Also, since the user B refers to this advertisement information, the electronic mail service provider discounts the use fee charged to the user A.

When such a use mode is realized, the advertisement owner may also have a merit. The reason of this merit achieved by the advertisement owner is given as follows: That is, there are great possibilities that the user B may refer to the advertisement information with having very high interest. Therefore, the higher advertisement effects can be expected in this case, as compared with the general advertisement referring actions, namely "users accidentally refer to such advertisement information." Also, such a use fee discounting system may be widely applied not only to electronic mails, but also various information provisions, for instance, information provisions by way of WWW (World Wide Web).

In accordance with the system of the present invention, the use fee may be discounted, and furthermore, the user should pay an extra use fee. One typical use mode according to this system will now be explained. Similar to the above-explained use mode, the following case may be considered in which the user "A" sends the electronic mail to the user "B." After the user A forms an electronic mail, this user A selects one, or more advertisement information which might be useful for the user B, and then adds this selected advertisement information to the formed electronic mail. Then, this user A transmits the resulting electronic mail. On the other hand, the user B refers to the electronic mail sent from the user A, or may refer to the additional information before/after referring to this electronic mail. When the electronic mail service provider detects such a fact that the user B refers to the advertisement information added to the electronic mail sent from the user A, this electronic mail service provider requests to pay an extra use fee charged to this user A based on the added advertisement information. As such a mail use mode, the following case may be conceived: That is, the main body of this electronic mail corresponds to advertisement information, the additional information corresponds to pay information, and an advertisement provider pays a use fee of such pay information.

### BRIEF DESCRIPTION OF THE DRAWINGS

Fig. 1 is a block diagram for showing an arrangement of an information distributing apparatus according to a first embodiment mode of the present invention.

Fig. 2 is a structural diagram of the information used in the first embodiment mode of the present invention.

Fig. 3 is a flow chart for representing operation of the first embodiment mode of the present invention.

Fig. 4 is a table diagram for indicating an example of an additional information charge table in the first embodiment mode of the present invention.

Fig. 5 is a flow chart for explaining operation of a charge calculating unit in the first embodiment mode of the present invention.

Fig. 6 is a table diagram for indicating an example of charge data in the first embodiment mode of the present invention.

Fig. 7 is a block diagram for showing an arrangement of an information distributing apparatus according to a second embodiment mode of the present invention.

Fig. 8 is a table diagram for representing an example of an additional information charge table in the second embodiment mode of the present invention.

Fig. 9 is a flow chart for explaining operation executed when the additional information is referred in the second embodiment mode of the present invention.

Fig. 10 is a table diagram for representing an example of charge data in the second embodiment mode of the present invention.

Fig. 11 is a block diagram for showing an arrangement of an information storing apparatus according to a third embodiment mode of the present invention.

Fig. 12 is a flow chart for representing operation of the third embodiment mode of the present invention.

Fig. 13 is a table diagram for indicating an example of a reference record in the third embodiment mode of the present invention.

Fig. 14 is a block diagram for showing an arrangement of an information providing apparatus according to a fourth embodiment mode of the present invention.

Fig. 15 is a block diagram for showing an arrangement of an information distributing/storing apparatus according to a fourth embodiment mode of the present invention.

Fig. 16 is a flow chart for describing operation executed when the information is stored in the fourth embodiment mode of the present invention.

Fig. 17 is a flow chart for explaining operation of the charge calculation unit executed when the information is stored in the fourth embodiment mode of the present invention.

Fig. 18 is a flow chart for explaining operation of the reference control unit executed when the information is provided in the fourth embodiment mode of the present invention.

Fig. 19 is a block diagram for showing the arrangement of the conventional information providing apparatus.

### DETAILED DESCRIPTION OF THE PREFERRED EMBODIMENTS

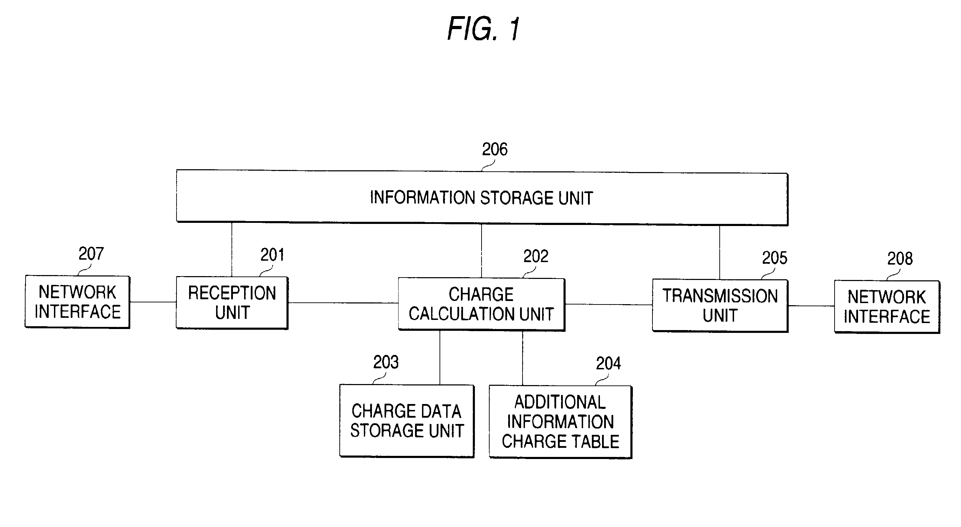

Referring now to Fig. 1 to Fig. 18, various embodiment modes of the present invention will be described. It should be noted that the present invention is not limited to these embodiment modes, but may be freely modified without departing from the technical scope and spirit of the present invention.
[0014]

### (EMBODIMENT MODE 1)

A first embodiment mode of the present invention will now be explained with reference to Fig. 1. This embodiment mode 1 is related to the above-explained conventional information distributing apparatus 102 shown in Fig. 19. That is, the internal arrangement of this information distributing apparatus is modified in accordance with this embodiment mode 1. In Fig. 1, an information distributing apparatus, according to this embodiment mode 1, is arranged by a reception unit 201, a charge calculation unit 202, a charge data storage unit 203, an additional information charge table 204, a transmission unit 205, an information storage unit 206, and network interfaces 207 and 208. The network interface 207 is connected to the network 105 shown in Fig. 19. Also, the network interface 208 is connected to the network 106 shown in Fig. 19.

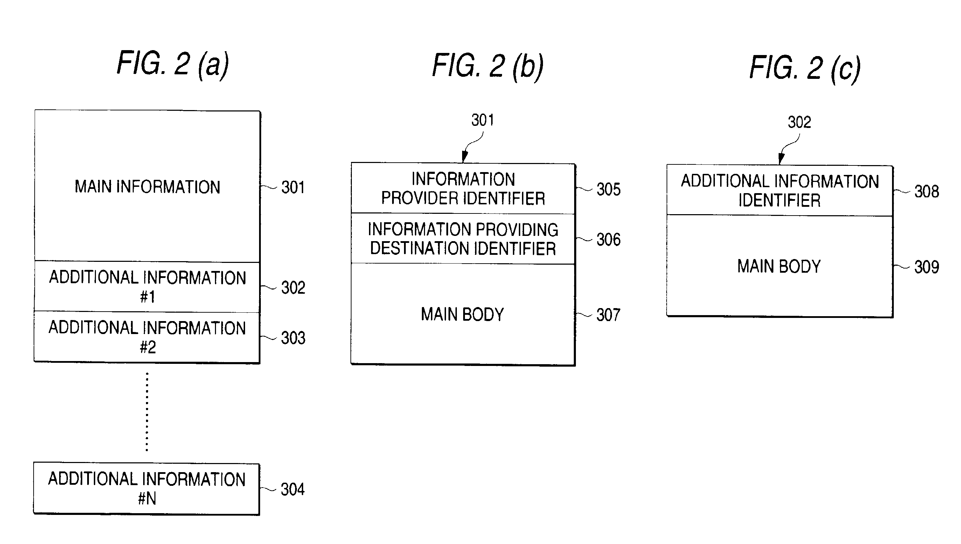

In Figs. 2A to 2C, there is shown a structure of information which is received by the information distributing apparatus according to this embodiment mode 1. In Figs. 2A to 2C, reference numeral 301 shows main information, reference numeral 302 represents first additional information, reference numeral 303 indicates second additional information, reference numeral 304 denotes an N-th (symbol "N" being natural number) additional information, and reference numeral 305 is an information provider identifier contained in the main information 301. Also, reference numeral 306 shows an information providing destination identifier contained in the main information 301, reference numeral 307 represents a main body indicative of the content of the main information 301, reference numeral 308 shows an additional information identifier contained in the additional information 302, and reference numeral 309 shows a main body indicative of the content of the additional information 302. All of the additional information such as the additional information 303 and 304 owns a similar structure to that of the additional information 302, as shown in Fig. 2C. The information having such a structure may be concretely defined/described by employing information description languages such as MIME (multipurpose Internet Mail Extensions), HTML (Hyper Text Markup Language), MHEG (Multimedia and Hypermedia Expert Group), and XML (Extensible Markup Language) .

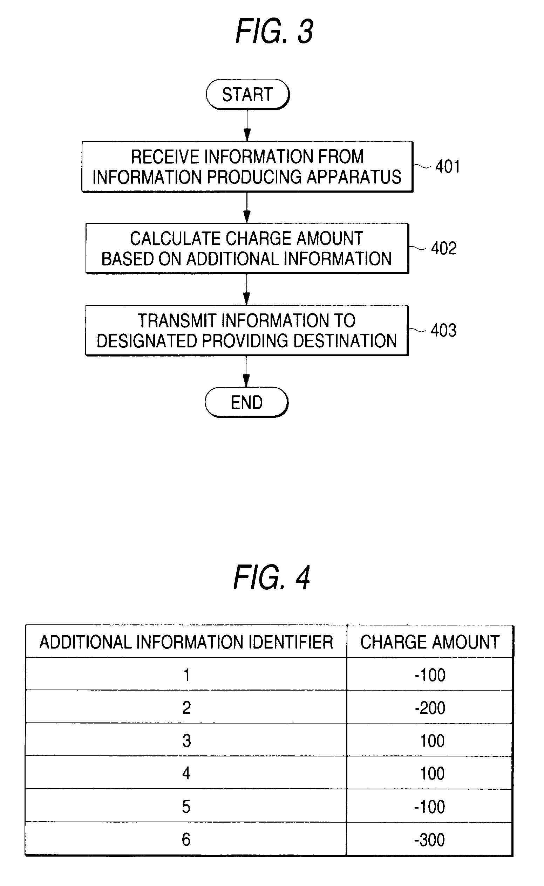

As represented in a flow chart of Fig. 3, operations of the information distributing apparatus, according to this embodiment mode 1, is mainly constituted by three continuous process operations. First, at a step 401, the reception unit 201 stores information into the information storage unit 206. This information is received via the network interface 207. At this time, the reception unit 201 applies an identifier to this received information in order to smoothly carry out the subsequent process operations. When the storing operation of this information is accomplished, the reception unit 201 sends both the identifier of this information and also a reception time instant thereof to the charge calculation unit 202, and thus, commences the charge calculation process operation. Next, at a step 402, the charge calculation unit 202 derives such information corresponding to the identifier from the information storage unit 206, calculates a charge amount based upon the additional information, and transmits the identifier of this information to the transmission unit 205 so as to transmit this information to a designated providing destination. A detailed content of the charge calculating process operation will be described later. Then, at a step 403, the transmission unit 205 drives information corresponding to the identifier from the information storage unit 206, and then transmits this derived information via the network interface 208 to the providing destination of the information described in the main information. When the transmission of this information is completed, the transmission unit 205 deletes this information saved in the information storage unit 206.

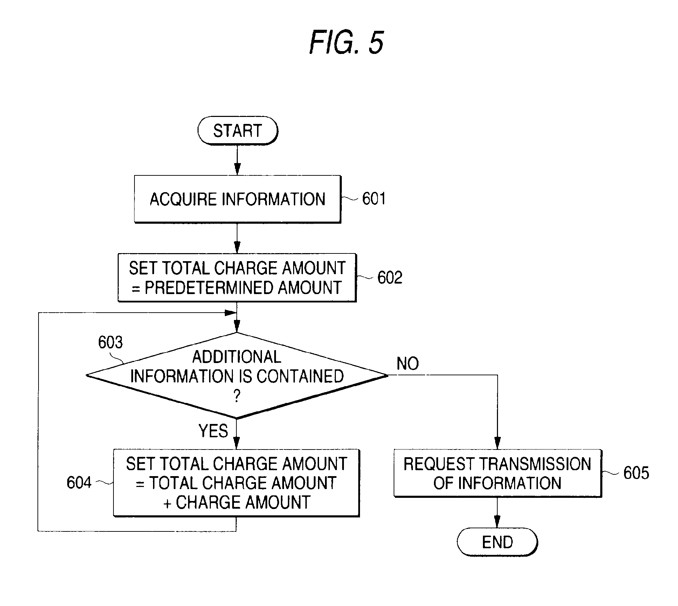

Next, operations of the charge calculation unit 202 will now be explained. It should also be noted that Fig. 4 is a table for representing an example of the additional information charge table. An item of a charge amount, to which a minus symbol (-) is attached, implies that the relevant charge amount is reduced, whereas an item of a charge amount, to which the minus symbol (-) is not attached, implies that a charge amount is added. Fig. 5 is a flow chart for indicating operations of the charge calculation unit 202. At a first step 601, in response to a request issued from the reception unit 201, the charge calculation unit 202 acquires such information corresponding to an information identifier from the information storage unit 206. The charge calculation unit 202 refers to the main information 301 of this acquired information so as to derive both the information provider identifier 305 and the information providing destination identifier 306, and then stores the derived information provider identifier 305 and the derived information providing destination identifier 306 in connection with both a reception time instance of this information and an information identifier into the charge data storage unit 203. Next, at a step 602, a total charge amount corresponding to this information stored in the charge data storage unit 203 is set to a predetermined amount. This "predetermined amount" (alternatively, "fixed amount") is dynamically (time to time) determined based upon a consumer who uses this information, a data amount of this information, and use time for a network. Next, at a step 603, the charge calculation unit 202 checks as to this information contains additional information. When the additional information is contained, the charge calculation unit 202 derives the addition information identifier 308 from this additional information, and subsequently, derives a charge amount corresponding to this additional information identifier 308 from the additional information charge table 204 so as to recalculate the total charge amount. Then, both this additional information identifier 308 and a new total charge amount are stored in the charges data storage unit 203, and then the process operation is advanced to a step 603. In the case that there are plural sets of such additional information, the process operations defined at the step 603 and the step 604 are repeatedly carried out plural times equal to a total number of the additional information so as to calculate a total charge amount. To the contrary, in the case that the information contains no additional information at step 603, the charge calculation unit 202 sends an identifier corresponding to this information to the transmission unit 205, and requests the transmission of this information at a step 605.

As one example, assuming now that the total charge amount at the step 602 is 1000, and two sets of the additional information identifiers are 2 and 4, respectively, a total charge amount at the first time of the step 604 becomes 1000 - 200 = 800; a total charge amount at the second time of the step 604 becomes 800 + 100 = 900, and a final total charge amount becomes 900. As previously explained, the additional information may be roughly classified into discount information and pay information. As to the discount information, when additional information is referred, a charge amount is reduced. As to the pay information, when additional information is referred, a charge amount is added. As the discount information, there is an advertisement, whereas the pay information, there is pay product information.

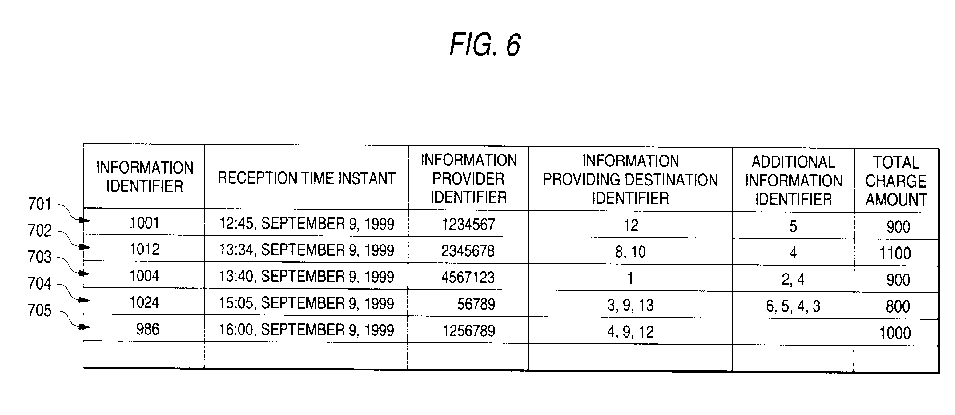

Fig. 6 indicates one example of data stored in the charge data storage unit 203 in a table format. In Fig. 6, reference numeral 701 shows such a data example that the information providing destination is one destination and the addition information is one information; reference numeral 702 indicates such a data example that the information providing destination corresponds to a plurality of destinations (two destinations) and the additional information is one information; reference numeral 703 represents such a data example that the information providing destination is one destination and the additional information corresponds to a plurality of additional information (two pieces of additional information); reference numeral 704 shows such a data example that the information providing destination corresponds to a plurality of destinations (three destinations) and the additional information corresponds to a plurality of additional information (four pieces of additional information); and also reference information 705 shows such a data example that the information providing destination corresponds to a plurality of destinations (three destinations) and there is no additional information. Also, a total charge amount of each of the above-explained examples shown in Fig. 6 is such a value which is calculated in accordance with the sequential operation defined at the step 604 by employing the respective charge amounts shown in Fig. 4, assuming now that a predetermined total charge amount is 1000. A charging operation for the information provider may be obtained by totalizing the total charge amounts by employing both the information provider identifier 305 and the reception time instant from the data stored in the charge data storage unit 203. This totalization process operation is regularly performed every week, every day, or temporarily carried out if required.

As previously described in detail, in accordance with this embodiment mode 1, since the charge calculating mechanism (202, 203, 204) is provided on the side of the information distributing apparatus, such an information providing apparatus may be realized by which increasing/decreasing of the use fee may be carried out even for the information provider. In other words, when such information made of both the information produced by the information provider and the additional information such as the advertisement selected by the information provider is distributed and provided, the information providing apparatus can be realized which can increase, or decrease the use fee charged to the information provider based upon the additional information. Also, this information providing apparatus may be utilized not only as the charge adjusting operation with respect to the information provider, but also as the communication means. That is, since the additional information is mailed, the advertisement can be utilized like a communication means, although this advertisement has been merely provided only in one-way direction and also has been indiscriminatively and unintentionally provided. As a consequence, the information provider can more effectively provide the advertisement, namely can achieve the secondary effect, so that the information providing apparatus can have high practical merits.

### (SECOND EMBODIMENT)

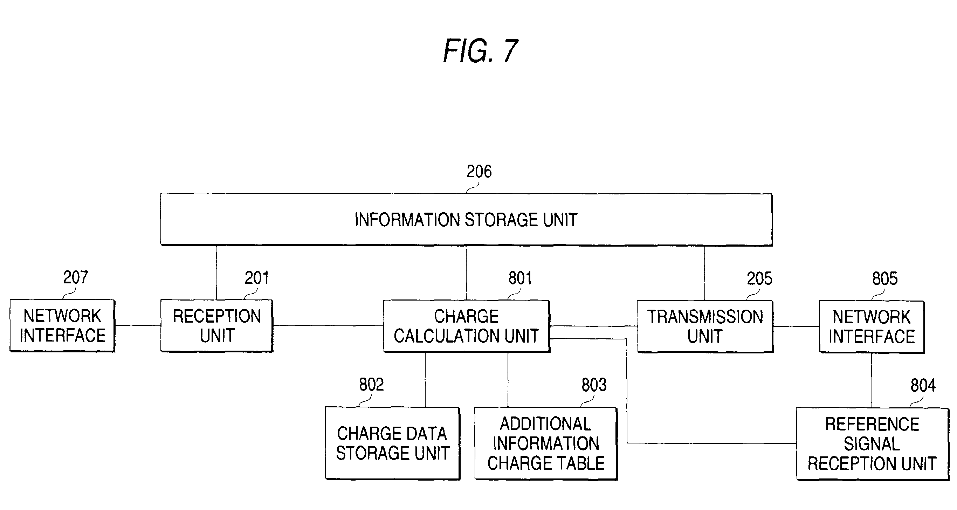

A second embodiment mode of the present invention will now be explained with reference to drawings. This embodiment mode 2 is also related to the above-explained conventional information distributing apparatus 102 shown in Fig. 19. That is, the internal arrangement of this information distributing apparatus is modified in accordance with this embodiment mode 2. In Fig. 7, an information distributing apparatus, according to this embodiment mode 2, is arranged by a charge calculation unit 801, a charge data storage unit 802, an additional information charge table 803, a reference signal reception unit 804, and a network interface 805. Other structural elements of this information distributing apparatus are identical to the structural elements corresponding thereto, which are described in Fig. 1.

Since a structure of information received by the information distributing apparatus according to this embodiment is similar to the information structure of Fig. 2, this similar information structure is omitted. Also, operations of the information distributing apparatus shown in Fig. 7 are mainly subdivided into two different operations, namely operation executed when information is distributed by the information distributing apparatus, and operation executed when an information consumer refers to information. The operation executed when the information is distributed by this information distributing apparatus is defined as the flow chart shown in Fig. 3, and is similar to that of the information distributing apparatus shown in Fig. 1. As a consequence, operations of the information distributing apparatus, which detects that an information consumer refers to additional information, will now be explained in this embodiment mode 2.

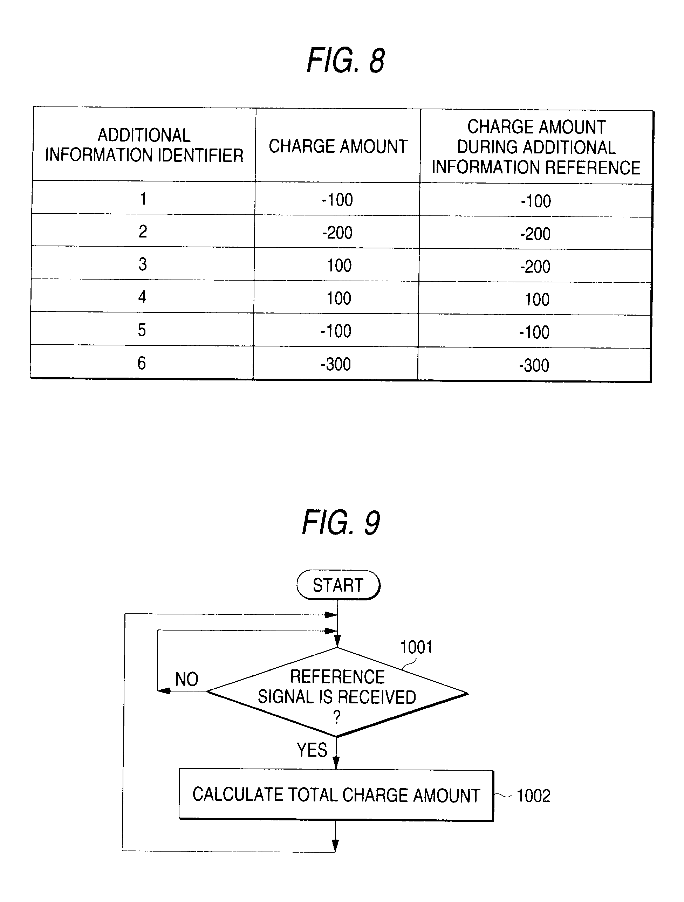

Fig. 8 indicates an example of the additional information charge table 803. An implication of a minus symbol (-) is similar to that of Fig. 4. Fig. 9 is a flow chart for describing operations executed when the information distributing apparatus detects that the additional information is referred. First, at a step 1001, the reference signal reception unit 804 continues to receive an additional information reference signal via the network interface 805. When this additional information reference signal is received, the reference signal reception unit 804 transfers the information provider identifier 305 and the additional information identifier 308 and also a reference time instant to the charge calculation unit 801 in order to request a charge calculation process by this charge calculation unit 801. The reference signal owns information which is constituted by the information provider identifier 305, the additional information identifier 308, and the reference time instant. This reference signal is produced by either the information storing apparatus 103 or the information reproducing apparatus 104. At the next step 1002, the charge calculation unit 801 derives a charge amount for reference time corresponding to the additional information identifier 308 from the additional information charge table 803. This charge calculation unit 801 stores this derived charge amount for reference time into the charge data storage unit 802 in combination with the information provider identifier 305, the additional information identifier 308, and the reference time instant. Then, the process operation is advanced to the step 1001.

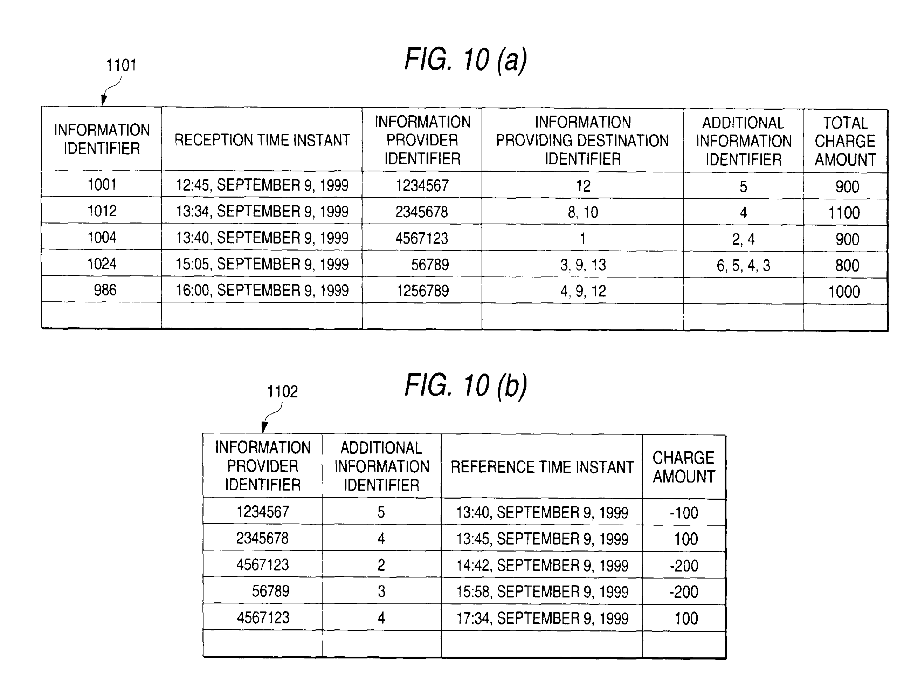

Fig. 10 shows an example of data stored in the charge data storage unit 802 in a table format. In Fig. 10, reference numeral 1101 shows charge data when information is distributed, and reference numeral 1102 indicates charge data when additional information is referred. The respective lines of the charge data 1101 are formed in a similar to the charge data of Fig. 6, and own the same meanings. The respective lines of the charge data 1102 are produced at the step 1002. As charging operation for the information provider may be obtained by totalizing the total charge amounts by employing the information provider identifier 305, the reception time instant and the reference time instant from the data stored in the charge data storage unit 802. This totalization process operation is regularly performed every week, everyday, ortemporarilycarried out if required.

As previously described in detail, in accordance with this embodiment mode 2, since the reference signal reception unit 804 is provided on the side of the information distributing apparatus, such an information providing apparatus may be realized by which increasing/decreasing of the use fee may be carried out based upon the referred additional information while the information consumer refers to the additional information in addition to the effect achieved in the above-explained embodiment mode 1. As a result, the practical values of this information providing apparatus are very high. In other words, since the operations on the side of the information provider are mutually coupled to the operations on the side of the consumer, in the case that the information provider recommends/provides the advertisement, the use fee is increased/decreased only when the consumer really refers to this information. As a result, favorable matters and trends of the information provider can be grasped. Furthermore, the subsequent information provisions can be improved in higher efficiencies, so that the higher practical effect can be considerably achieved.

### (THIRD EMBODIMENT)

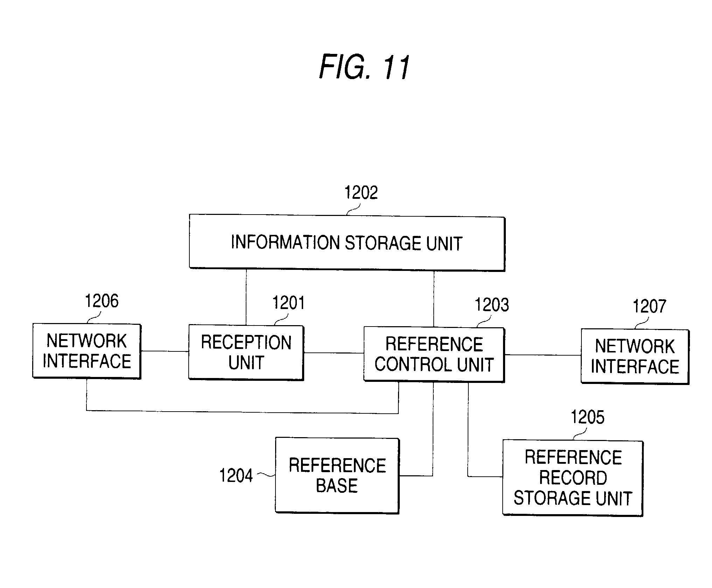

Next, a third embodiment of the present invention will now be explained with reference to drawings. This embodiment mode 3 is related to the conventional information storing apparatus 103 shown in Fig. 19, and the internal arrangement thereof is improved in accordance with this embodiment mode 3. Fig. 11 shows an arrangement of an information storing apparatus according to this third embodiment mode. This information storing apparatus is provided with a reception unit 1201, an information storage unit 1202, a reference control unit 1203, a reference base 1204, a reference record storage unit 1205, and network interfaces 1206/1207. The network interface 1206 is connected to the network 106 shown in Fig. 19. Also, the network interface 1207 is connected to the network 107 shown in Fig. 19. A structure of information received by the information storage apparatus according to this embodiment mode 3 is similar to that of Fig. 2.

Operations of the information storage apparatus, according to this third embodiment, are mainly classified into two different operations, namely operation of this information storage apparatus when information is received from an information distributing apparatus, and operation of this information storing apparatus when an information consumer refers to information. First of all, a description is made of operations of the information storing apparatus when the information is received from the information distributing apparatus. The reception unit 1201 stores information into the information storage unit 1202. This information is received via the network interface 1206. At this time, the reception unit 1201 applies an identifier to this received information in order to smoothly carry out the subsequent process operations. When the storing operation of this information is accomplished, the reception unit 1201 sends the identifier of this information to the reference control unit 1203, and thus, commences the provision of this information.

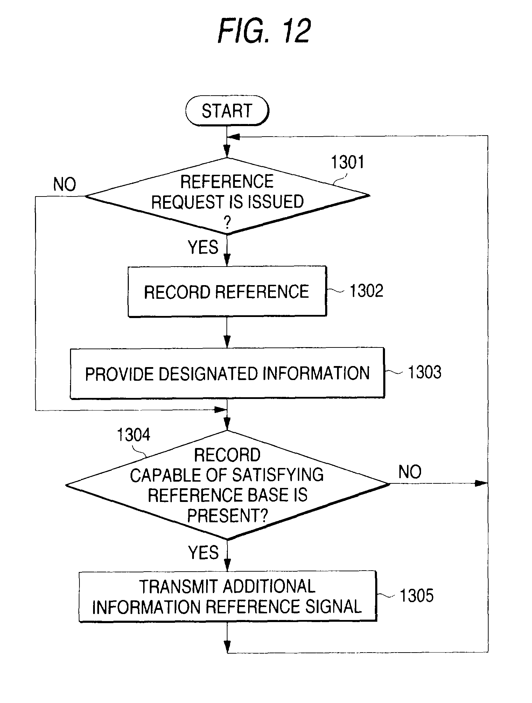

Next, the operations of the information storing apparatus when the information consumer refers to the information will now be made with reference to a flow chart shown in Fig. 12. At a first step 1301, the reference control unit 1203 checks an information reference request which is sent from the information reproducing apparatus 104 via the network interface 1207. When the information reference request is not issued, the process operation is advanced to a step 1304. To the contrary, when the information reference request is received, the reference control unit 1203 stores a record of an information provision into the reference record storage unit 1205 at a step 1302. Next, at a step 1303, the reference control unit 1203 provides the designated information. After the reference control unit 1203 has provided the provision of the information, the reference control unit 1203 searches the reference records stored in the reference record storage unit 1205 at a step 1304, and then extracts all of references to the additional information capable of satisfying the reference base 1204. After all of the references of the additional information capable of satisfying the reference base 1204 have been extracted, at a step 1305, the reference control unit 1203 produces such an additional information reference signal, and then transmits this additional information reference signal via the network interface 1206 to the information distributing apparatus 102. This additional information reference signal is constituted by the information provider identifier 305 contained in the main information 301, the additional information identifier 308 contained in this additional information, and also the reference time instant. When the producing/transmitting operations of the additional information reference signals with respect to all of the extracted results are accomplished by the reference control unit 1203, the process operation is returned to the previous step 1301.

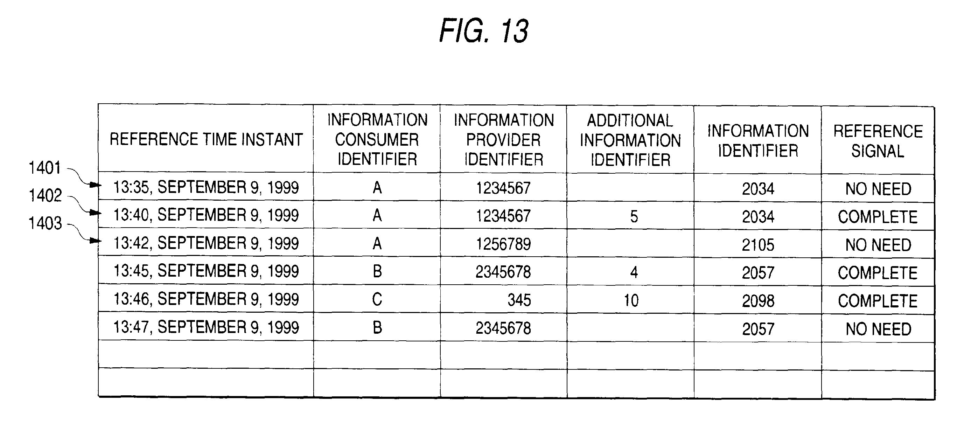

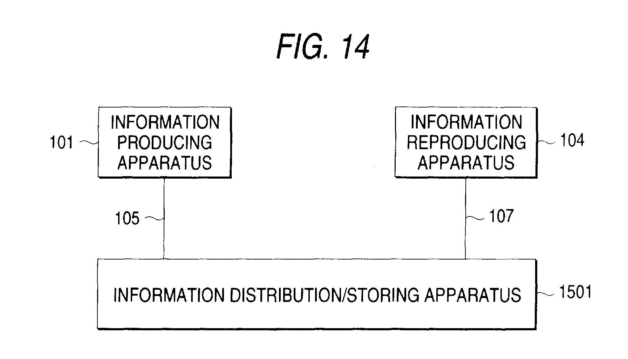

The reference base 1204 may be properly set in accordance with a providing format and a providing purpose of information, for instance, referring number of the additional information, and referring time of the additional information. As the reference base 1204, the additional information reference signal is produced every time the information consumer refers to the additional information one time. Under this reference base, an example of the reference records stored in the reference record storage unit 1205 is shown in Fig. 13. In Fig. 13, reference numeral 1401 implies that the reference time instant is 13:35 September 9, 1999; the information consumer is "A"; the information provider equal to 1234567 refers only to the main information 301 of the information 2034. Accordingly, the production of the additional information reference signal is not required. Also, in Fig. 14, reference numeral 1402 implies that the reference time instant is 13:40 September 9, 1999; the information consumer is "A"; the information provider equal to 1234567 refers to the additional information 5 of the information 2034. Accordingly, the additional information reference signal is transmitted to the information distributing apparatus 102 after the next information reference 1403. Before the additional information reference signal is transmitted, the item of "reference signal" becomes "required." Subsequently, every the information referring operation is performed, the reference record is additionally stored in the reference record storage unit 1205 in a similar manner.

As previously described, in accordance with the embodiment mode 3, the mechanism (1203, 1204, 1205) for managing both the information request issued from the information request person (information consumer) and the reference information of this information request is provided on the side of the information storing apparatus 103. Similar to the embodiment mode 2, such reference information can be notified to the information distributing apparatus (arrangement of Fig. 7), which is required so as to realize such a system that since the information consumer refers to the additional information, the use fee charged to the information provider is increased, or decreased based upon the additional information to be referred. In other words, since the operations on the side of the information provider are mutually coupled to the operations on the side of the consumer, in the case that the information provider recommends/provides the advertisement, the use fee is increased/decreased only when the consumer really refers to this information. As a result, favorable matters and trends of the information provider can be grasped. Furthermore, the subsequent information provisions can be improved in higher efficiencies, so that the higher practical effect can be considerably achieved.

It should also be noted that (1) only when (every time) the user refers to the (additional) information, the reference signal may be transmitted, and (2) when the user does not refers to the (additional) information, the reference signal may be transmitted (in constant interval). In this case, (1) since the charge data is updated every time the information referring operation, the storage content of the charge data storage unit reflects always the latest storage content, the time required for the totalizing process operation can be shortened. (2) Since such a system capable of regularly collecting the reference records to send the collected reference records to the information distributing apparatus is provided on the side of the information storing apparatus, the charge data can be updated. This system (2) may have such a merit that since the reference records are collected and sent, the load given to the network can be reduced, as compared with the system (1).

### (FORTH EMBODIMENT)

Next, a fourth embodiment mode of the present invention will now be explained with reference to drawings. This embodiment mode 4 is related to an information providing system arranged in such a manner that both the information distributing apparatus 102 and the information storing apparatus 103 shown in Fig. 19 are combined with each other to construct a single apparatus, while the internal arrangements of these conventional apparatuses 102/103 are modified in accordance with this fourth embodiment mode. Fig. 14 represents an arrangement of an information providing system using an information distributing/storing apparatus according to this embodiment mode 4. This information distributing/storing apparatus is constituted by the structural elements 101, 104, 105, and 107 shown in Fig. 19.

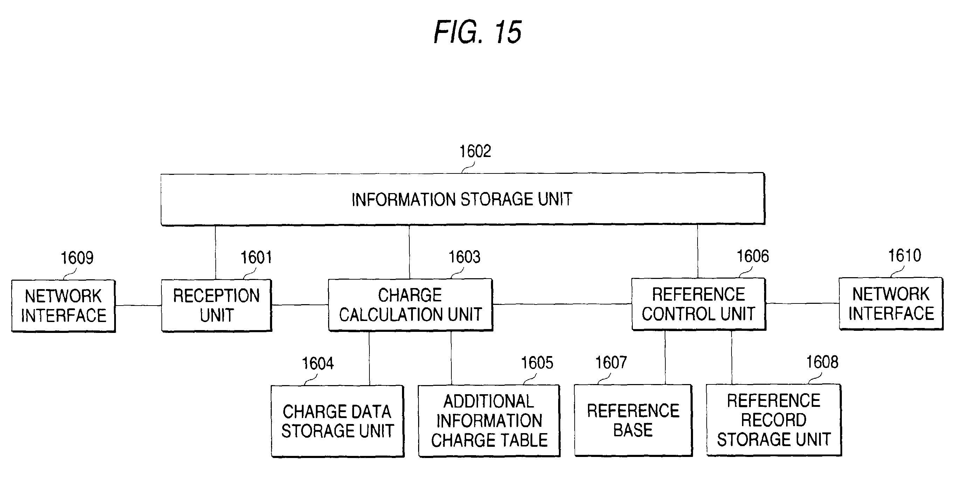

Fig. 15 shows an arrangement of an information distributing/storing apparatus 1501 according to this embodiment mode 4. This information distributing/storing apparatus 1501 is arranged by a reception unit 1601, an information storage unit 1602, a charge calculation unit 1603, a charge data storage unit 1604, an additional information charge table 1605, a reference control unit 1606, a reference base 1607, a reference record storage unit 1608, and network interfaces 1609/1610. The network interface 1609 is connected to the network 105 shown in Fig. 19. Also, the network interface 1610 is connected to the network 107 shown in Fig. 19. Astructure ofinformationreceivedbytheinformationdistributing/storing apparatus 1501 according to this embodiment mode 4 is similar to that of Fig. 2.

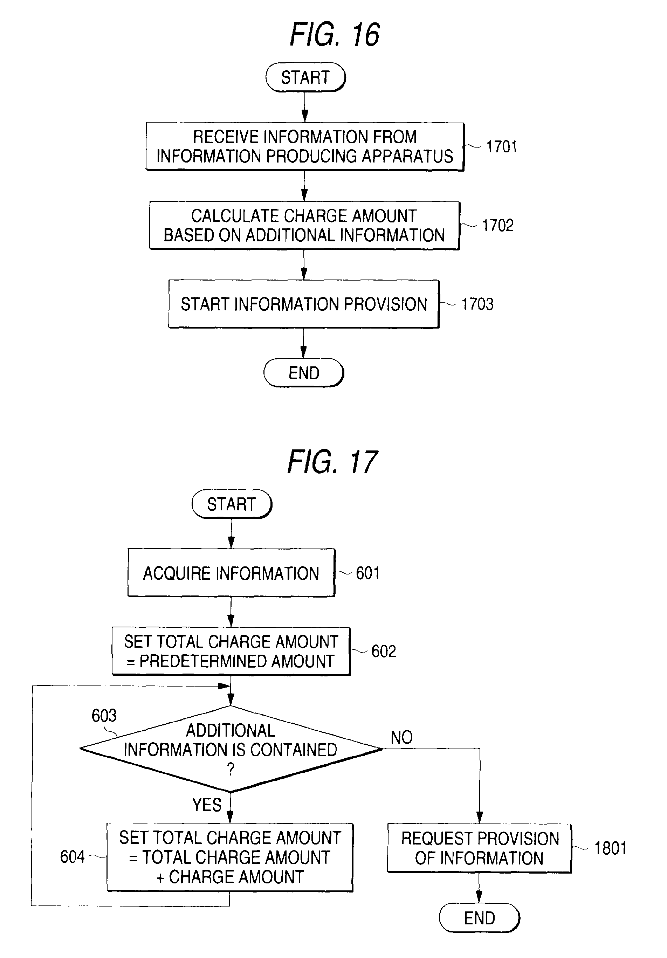

Also, operations of the information distributing/storing apparatus 1501, according to this embodiment mode 4, are mainly subdivided into two different operations, namely one operation executed when information is stored, and another operation executed when information is provided. First, as indicated in a flow chart of Fig. 16, the operation of this information distributing/storing apparatus 1501 executed when the information is stored is mainly constituted by three sets of continuous process operations. First, at a step 1701, the reception unit 1601 stores information into the information storage unit 1602. This information is received via the network interface 1609. At this time, the reception unit 1601 applies an identifier to this received information in order to smoothly carry out the subsequent process operations. When the storing operation of this information is accomplished, the reception unit 1601 sends both the identifier of this information and also a reception time instant thereof to the charge calculation unit 1603, and thus, commences the charge calculation process operation. Next, at a step 1702, the charge calculation unit 1603 derives such information corresponding to the identifier from the information storage unit 1602, calculates a charge amount based upon the additional information, and transmits the identifier of this information to the reference control unit 1606 so as to provide this information to a designated providing destination. A detailed content of the charge calculating process operation will be described later. Then, at a step 1703, the reference control unit 1606 provides the information stored in the information storage unit 1602 in response to a request received via the network interface 1610 from the information reproducing apparatus 104. In this case, this reference control unit 1606 instructs the charge calculation unit 1603 to calculate the charge amount in response to the referred information.

Referring now to a flow chart of Fig. 17, operations of the charge calculation unit 1603 when the information is stored will be explained. An example of the additional information charge table 1605 is identical to that of Fig. 4, and operations defined from a step 601 to a step 604 are identical to the operations of the charge calculation unit 202 shown in Fig. 5. Then, at a further step 603, when there is no additional information to which the charge process operation should be carried out, the process operation is advanced to a step 1801. At this step 1801, the charge calculation unit 1603 sends an information identifier of the relevant information stored in the information storage unit 1602 so as to commence the provision of this information. As a result of the charge calculation executed when the information is stored, as one example, such data as shown in reference numeral 1101 of Fig. 6, or Fig. 10 is stored in the charge data storage unit 1604, so that the charge amounts may be totalized with respect to the information provider, if necessary.

Next, a description will now be made of operations of the information distributing/storing apparatus 1501 when the information is provided. First of all, operations of the reference control unit 1606 when the information is provided will now be explained with reference to a flow chart shown in Fig. 18. In Fig. 18, operations defined from a step 1301 to a step 1304 are identical to those of the reference control unit 1203 shown in Fig. 12. At the step 1204, after all of the additional information references which can satisfy the reference base 1607 have been extracted, the reference control unit 1606 produces an additional information reference signal and then transmits this additional information reference signal to the charge calculation unit 1603 at a step 1901. The additional information reference signal is constituted by the information provider identifier 305 contained in the main information 301, the additional information identifier 308 contained in this additional information, and also the reference time instant. When the productions/transmissions of the additional information reference signals with respect to all of the extracted results are accomplished, the process operation is returned to the previous step 1301. Similar to the reference base 1204, this reference base 1607 may be properly set in accordance with the information providing format and the information providing purpose, for example, the reference number when the additional information is referred, and the reference time while the additional information is referred.

It should be understood that operations of the charge calculation unit 1603 when the information is provided are identical to those described in the flow chart of Fig. 9. An example of the additional information charge table 1605 used in this case is identical to the example shown in Fig. 8. As a result of operations executed in the case that the charge calculation unit 1603 provides the information, data similar to the data 1102 shown in Fig. 10 is stored as one example into the charge data storage unit 1604.

As previously explained above, in accordance with this embodiment mode 4, the information distributing/storing apparatus 1501 (for example, web mail) is provided which is constituted by integrally combining the information distributing apparatus with the information storing apparatus. Similar to the embodiment mode 1 through the embodiment mode 3, the following information distributing/storing operations can be realized. That is, in such a case that the information is distributed/provided and this information is constituted by the information formed by the information provider and also the additional information such as the advertisement selected by the information provider, the use fee charged to the information provider can be reduced and/or increased based upon the additional information. Furthermore, since the information consumer refers to the additional information, the use fee charged to the information provider can be reduced and/or increased based on the additional information. As a consequence, the practical effect can be largely achieved.

It should also be noted in the embodiment mode 3 (Fig. 11) and the embodiment mode 4 (Fig. 15) that the information distributing apparatus functioning as the reception side of the reference record is assumed to be operated as follows: That is, the charge data is updated by a so-called "event driven" manner. Then, the reference control unit is so arranged to having the reception function of the information (namely, in such an arrangement, structural element of transmission unit is not independently provided). Alternatively, this transmission function may be separately employed. In this case, the expression "event driven" implies that every time an event is carried out (in this case, reference record is received), a process operation corresponding to this event is carried out, namely the charge amount data is updated. The information distributing apparatus functioning as the reference record reception side is not designed in such a manner that the reference record is received at a predetermined time instant, but is so designed that when the event occurs, a preselected process operation is carried out.

As previously described in detail, in accordance with the information distributing apparatus, this information distributing apparatus is comprised of: the reception unit for receiving information to be provided; the informationstorage unit for storing thereinto the received information; the charge calculation unit for calculating the charge amount in accordance with additional information owned by the information by analyzing the information stored in the information storage unit, or for calculating the charge amount based upon the reference result of the additional information; the charge data storage unit for storing thereinto the calculated charge amount; and the transmission unit for transmitting the information stored in the information storage unit to the designated providing designation. As a consequence, such an information providing apparatus can be realized. That is, in such a case that the information is distributed/provided and this information is constituted by the information formed by the information provider and also the additional information such as the advertisement selected by the information provider, the use fee charged to the information provider can be reduced and/or increased based upon the additional information.

Also, in accordance with the information distributing apparatus of the present invention, this informaiton distributing apparatus is comprised of: the reception unit for receiving information to be provided; the information storage unit for storing thereinto the received information; the charge calculation unit for calculating the charge amount in accordance with additional informaiton owned by the information by analyzing the information stored in the information storage unit, or for calculating the charge amount based upon the reference result of the additional information; the charge data storage unit for storing thereinto the calculated charge amount; the transmission unit for transmitting the information stored in the information storage unit to the designated providing designation; and furthermore, the reference signal reception unit for detecting referring of the additional information. As a consequence, the following information providing apparatus can be realized. That is, in such a case that the information is distributed/provided and this information is constituted by the information formed by the information provider and also the additional information such as the advertisement selected by the information provider, the use fee charged to the information provider can be reduced and/or increased based upon the additional information. Furthermore, since the information consumer refers to the additional information, the use fee charged to the information provider can be reduced and/or increased based on the additional information.

Also, in accordance with the information storing apparatus of the present invention, this information storing apparatus is comprised of: the reception unit for receiving information to be provided; the information storage unit for storing thereinto the received information; the reference record storage unit and the reference control unit for providing information in response to the request, and also for producing the signal used to notify the reference of additional information owned by the information which is requested to be referred. As a consequence, the following information providing apparatus can be realized. That is, in such a case that the information is distributed/provided and this information is constituted by the information formed by the information provider and also the additional information such as the advertisement selected by the information provider, the use fee charged to the information provider can be reduced and/or increased based upon the additional information.

Also, in accordance with the information storing/distributing apparatus of the present invention, the reception unit for receiving information to be provided; the information storage unit for storing thereinto the received information; the charge calculation unit for calculating the charge amount in accordance with additional information owned by the information by analyzing the information stored in the information storage unit, or for calculating the charge amount based upon the reference result of the additional information; the charge data storage unit for storing thereinto the calculated charge amount; and furthermore, the reference record storage unit and the reference control unit for providing the information stored in the information storage unit in response to the request and also for producing the signal used to notify the reference of the additional information. As a consequence, the following information providing apparatus can be realized. That is, in such a case that the information is distributed/provided and this information is constituted by the information formed by the information provider and also the additional information such as the advertisement selected by the information provider, the use fee charged to the information provider can be reduced and/or increased based upon the additional information. Furthermore, since the information consumer refers to the additional information, the use fee charged to the information provider can be reduced and/or increased based on the additional information.

Also, in accordance with the information providing system of the present invention, this information providing system is comprised of: as explained above, the information storing/distributing apparatus constituted by the information distributing apparatus and the information storing apparatus; the information producing apparatus for producing information which is provided via the network to the information storing/distributing apparatus; and the information reproducing apparatus for arbitrarily selecting the information saved in the information storing/distributing apparatus via the network to reproduce and display the arbitrarily and selectively received information. As a consequence, the following information providing apparatus can be realized. That is, in such a case that the information is distributed/provided and this information is constituted by the information formed by the information provider and also the additional information such as the advertisement selected by the information provider, the use fee charged to the information provider can be reduced and/or increased based upon the additional information.

## Claims

1. An information distributing apparatus comprising:
a reception unit for receiving information;
an information storage unit for storing thereinto said received information;
a transmission unit for transmitting information stored in said information storage unit to a designated providing destination;
a charge calculation unit for calculating a charge amount in accordance with additional information owned by said transmitted information; and
a charge data storage unit for storing thereinto charge amount information calculated by said charge calculation unit.

2. An information distributing apparatus comprising:
a reception unit for receiving information;
an information storage unit for storing thereinto said received information;
a transmission unit for transmitting information stored in said information storage unit to a designated providing destination;
a reference information reception unit for receiving reference information transmitted from said providing destination;
a charge calculation unit for calculating a charge amount in accordance with additional information owned by said transmitted information and said received reference information; and
a charge data storage unit for storing thereinto charge amount information calculated by said charge calculation unit;
wherein said reference information corresponds to such information related to the reference, which is produced at an arbitrary interval in the case that said providing destination refers to the additional information owned by the information transmitted to said designated providing destination, or irrespective of such a fact that said providing destination does not refer to said additional information.

3. An information storing apparatus comprising:
a reception unit for receiving information;
an information storage unit for storing thereinto said received information;
a reference record storage unit for recording such information related to information which is requested to be referred among the information stored in said information storage unit; and
a reference control unit for providing information in response to said request, and also for producing a signal used to notify a reference of additional information owned by said information which is requested to be referred.

4. An information storing/distributing apparatus comprising:
a reception unit for receiving information;
an information storage unit for storing thereinto said received information;
a reference record storage unit for recording such information related to information which is requested to be referredamongtheinformationstoredinsaidinformationstorage unit;
a reference control unit for providing information in response to said request, and also for producing a signal used to notify a reference of additional information owned by said information which is requested to be referred;
a charge calculation unit for calculating a charge amount in accordance with additional information owned by said information which is requested to be referred and also said reference information; and
a charge data storage unit for storing thereinto charge amount information calculated by said charge calculation unit;
wherein said reference information corresponds to such information related to the reference, which is produced at an arbitrary interval in the case that said requesting destination refers to the additional information owned by the information transmitted to said designated requesting destination, or irrespective of such a fact that said requesting destination does not refer to said additional information.

5. An information providing system comprising:
an information storing/distributing apparatus including:
a reception unit for receiving information;
an information storage unit for storing thereinto said received information;
a reference record storage unit for recording such information related to information which is requested to be referred among the information stored in said information storage unit;
a reference control unit for providing information in response to said request, and also for producing a signal used to notify a reference of additional information owned by said information which is requested to be referred;
a charge calculation unit for calculating a charge amount in accordance with additional information owned by said information which is requested to be referred and also said reference information; and
a charge data storage unit for storing thereinto charge amount information calculated by said charge calculation unit;
wherein said reference information corresponds to such information related to the reference, which is produced at an arbitrary interval in the case that said requesting destination refers to the additional information owned by the information transmitted to said designated requesting destination, or irrespective of such a fact that said requesting destination does not refer to said additional information;
an information producing apparatus for producing information which is provided via a network to said information storing/distributing apparatus; and
an information reproducing apparatus for arbitrarily selecting the information saved in said information storing/distributing apparatus via the network to reproduce and display the arbitrarily and selectively received information.

6. An information providing system comprising:
an information distributing apparatus including:
a reception unit for receiving information;
an information storage unit for storing thereinto said received information;
a transmission unit for transmitting information stored in said information storage unit to a designated providing destination;
a reference information reception unit for receiving reference information transmitted from said providing destination;
a charge calculation unit for calculating a charge amount in accordance with additional information owned by said transmitted information and said received reference information; and
a charge data storage unit for storing thereinto charge amount information calculated by said charge calculation unit;
wherein said reference information corresponds to such information related to the reference, which is produced at an arbitrary interval in the case that said providing destination refers to the additional information owned by the information transmitted to said designated providing destination, or irrespective of such a fact that said providing destination does not refer to said additional information;
an information storing apparatus including:
a reception unit for receiving information;
an information storage unit for storing thereinto said received information;
a reference record storage unit for recording such information related to information which is requested to be referredamongtheinformationstoredinsaidinformationstorage unit; and
a reference control unit for providing information in response to said request, and also for producing a signal used to notify a reference of additional information owned by said information which is requested to be referred;
an information producing apparatus for producing information which is provided via a network to said information storing/distributing apparatus; and
an information reproducing apparatus for arbitrarily selecting the information saved in said information storing/distributing apparatus via the network to reproduce and display the arbitrarily and selectively received information.
